# EUROPEAN PATENT APPLICATION

(11) **EP 4 586 518 A1**
(43) Date of publication of application: **16.07.2025**
(21) Application number: 25150855.2
(22) Date of filing: 09.01.2025
(51) Int. Cl.: H04B 7/06, H04B 7/08

(54) **BEAM FAILURE PREDICTION DETECTION BASED ON AI/ML**

(30) Priority: 15.01.2024 US 202463620980 P
(71) Applicant: Nokia Technologies Oy, 02610 Espoo (FI)
(72) Inventor: TILAK, Preetish, Naperville, 60563 (US); CHA, Hyun-Su, Naperville, 60563-1443 (US); LEE, Gilsoo, Naperville, 60563-1443 (US); XING, Yunchou, Lisle, 60532 (US); YUAN, Shuai, Warrenville, 60563 (US)
(74) Representative: Script Intellectual Property LLP

(57) **Abstract**

A user equipment determines an output of a model used to predict failure of a current beam used by the user equipment; and performs one of: determines to skip reporting of beam failure detection, in response to the output of the model used to predict failure of the current beam used with the apparatus being greater than or equal to a beam failure detection threshold, or determines to skip reporting of beam failure detection, in response to the output of the model used to predict failure of the current beam used with the apparatus being equal to one.

## Description

### TECHNICAL FIELD

The examples and non-limiting example embodiments relate generally to communications and, more particularly, to beam failure prediction detection based on AI/ML.

### BACKGROUND

It is known for a communication device to gain access to a communication network via an access network node.

### BRIEF DESCRIPTION OF THE DRAWINGS

The foregoing aspects and other features are explained in the following description, taken in connection with the accompanying drawings.
FIG. 1 is a block diagram of one possible and non-limiting system in which the example embodiments may be practiced.
FIG. 2 shows an illustrative example of UE mobility and an associated beam.
FIG. 3 shows an illustrative example of input and output of an AI/ML model.
FIG. 4 is a signaling diagram based on the examples described herein.
FIG. 5 is an example apparatus configured to implement the examples described herein.
FIG. 6 shows a representation of an example of non-volatile memory media used to store instructions that implement the examples described herein.
FIG. 7 is an example method, based on the examples described herein.
FIG. 8 is an example method, based on the examples described herein.

### DETAILED DESCRIPTION OF EXAMPLE EMBODIMENTS

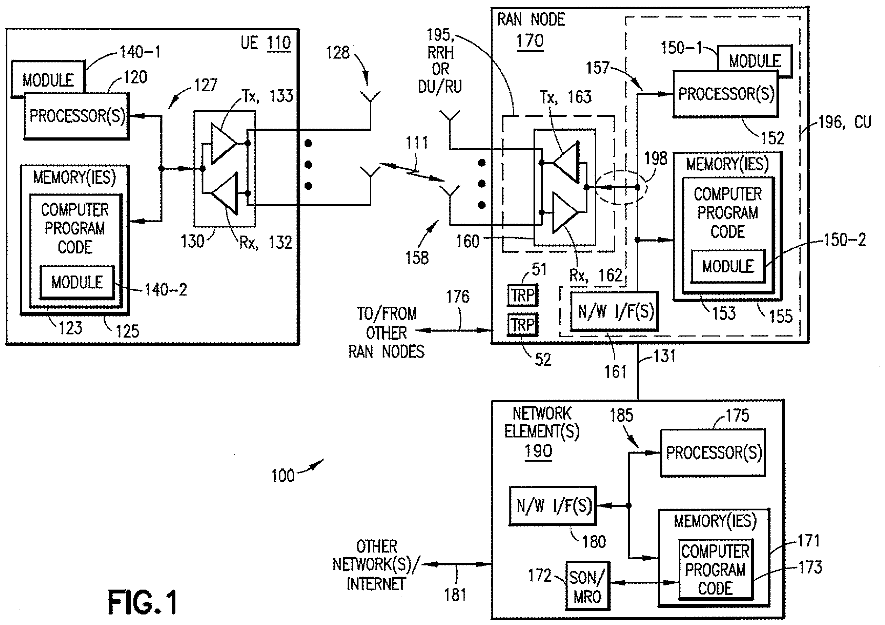

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, one or more memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A RAN node / gNB can comprise one or more TRPs to which the methods described herein may be applied. FIG. 1 shows that the RAN node 170 comprises TRP 51 and TRP 52, in addition to the TRP represented by transceiver 160. Similar to transceiver 160, TRP 51 and TRP 52 may each include a transmitter and a receiver. The RAN node 170 may host or comprise other TRPs not shown in FIG. 1.

A relay node in NR is called an integrated access and backhaul node. A mobile termination part of the IAB node facilitates the backhaul (parent link) connection. In other words, the mobile termination part comprises the functionality which carries UE functionalities. The distributed unit part of the IAB node facilitates the so called access link (child link) connections (i.e. for access link UEs, and backhaul for other IAB nodes, in the case of multi-hop IAB). In other words, the distributed unit part is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (mobility management entity)/SGW (serving gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. Computer program code 173 may include SON and/or MRO functionality 172.

The wireless network 100 may implement network virtualization, which is the process of combining hardware and software network resources and network functionality into a single, software-based administrative entity, or a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback devices having wireless communication capabilities, internet appliances including those permitting wireless internet access and browsing, tablets with wireless communication capabilities, head mounted displays such as those that implement virtual/augmented/mixed reality, as well as portable units or terminals that incorporate combinations of such functions. The UE 110 can also be a vehicle such as a car, or a UE mounted in a vehicle, a UAV such as e.g. a drone, or a UE mounted in a UAV. The user equipment 110 may be terminal device, such as mobile phone, mobile device, sensor device etc., the terminal device being a device used by the user or not used by the user.

UE 110, RAN node 170, and/or network element(s) 190, (and associated memories, computer program code and modules) may be configured to implement (e.g. in part) the methods described herein. Thus, computer program code 123, module 140-1, module 140-2, and other elements/features shown in FIG. 1 of UE 110 may implement user equipment related aspects of the examples described herein. Similarly, computer program code 153, module 150-1, module 150-2, and other elements/features shown in FIG. 1 of RAN node 170 may implement gNB/TRP related aspects of the examples described herein. Computer program code 173 and other elements/features shown in FIG. 1 of network element(s) 190 may be configured to implement network element related aspects of the examples described herein.

Having thus introduced a suitable but non-limiting technical context for the practice of the example embodiments, the example embodiments are now described with greater specificity.

Fundamentally, a beam failure is assumed to have happened when the error probability for the downlink control channel (PDCCH) exceeds a certain value. However, like radio-link failure, rather than actually measuring the PDCCH error probability the device declares a beam failure based on measurements of the quality of some reference signal. This is often expressed as measuring a hypothetical error rate. Beams are used with an apparatus for communication, where the apparatus may for example be a user equipment (e.g. UE 110) or a radio access network node (e.g. RAN node 170).

More specifically, the device should declare beam failure based on measured L1-RSRP of a periodic CSI-RS or an SS block that is spatially QCL with the PDCCH. By default, the device should declare beam failure based on measurement on the reference signal (CSI-RS or SS block) associated with the PDCCH TCI state. However, there is also a possibility to explicitly configure a different CSI-RS on which to measure for beam-failure detection.

Each time instant the measured L1-RSRP is below a configured value is defined as a beam-failure instance. If the number of consecutive beam-failure instances exceeds a configured value, the device declares a beam failure and initiates the beam-failure-recovery procedure.

If a predefined number of one or more beam failures is detected, a trigger beam failure recovery process with the candidate beam (PRACH) is performed. The predefined number of one or more beam failures to trigger this process is defined by beamFailureInstanceMaxCount in RRC. The UE sends PRACH with the ID specified in BFR-SSB-Resource.ra-PreambleIndex.

At a high level, beam failure recovery follows these steps (1-4): 1. Beam Failure detection, 2. Best Beam selection (SSB or CSI-RS), 3. Beam Failure Recovery Request, 4. Beam Failure Recovery Response.

The UE predicts a beam failure event for a specific beam (e.g., it may be a serving beam) based on its mobility, channel measurements, and so forth. The UE avoids keeping using the beam which would be probably detected as a failure beam.

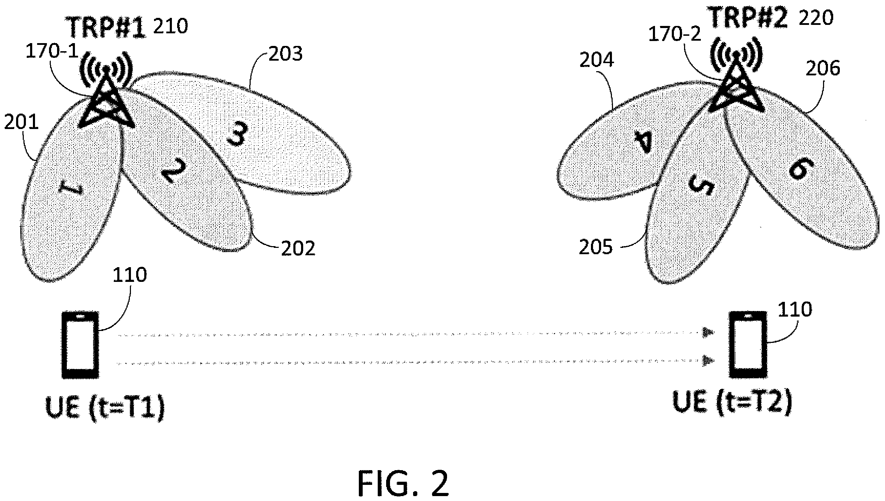

For example, consider FIG. 2. FIG. 2 shows an illustrative example of UE mobility and its associated beam. The UE 110 is currently on the left side and the serving beam is beam#1 201 of TRP#1 210. Let us assume the beam 1 201 is measured based on CSI-RS resource #1. The UE 110 may be able to predict that it will face the beam failure event once the UE 110 moves out to TRP#2 220 (right side of FIG. 2) more than X %, and then in that case the UE 110 does not need to keep using the CSI-RS#1 as a serving beam. The gNB (e.g. gNB 170-1) needs the serving beam information between the UE 110 and the network, as the gNB (e.g. gNB 170-1) may transmit PDCCH to the UE 110 through the serving beam.

In the legacy behavior, the UE 110 may face a BFD event at t=T2 and reports the BFD event to the gNB (e.g. gNB 170-1 or gNB 170-2), and the gNB (e.g. gNB 170-1 or gNB 170-2) performs a procedure for re-establishing a beam between the network and the UE 110, but based on this concept, the UE 110 does not need to determine a BFD event and report to the gNB (e.g. gNB 170-1 or gNB 170-2). The UE 100 will avoid the re-establishment procedure of beams.

Based on the AI/ML model, the UE 110 can predict or know the measurements of beam#1 ~ #6 at the place where UE 110 is at t=T2.

FIG. 2 shows TRP#1 210 associated with beam#1 (201), beam#2 (202), and beam#3 (203). FIG. 2 shows TRP#2 220 associated with beam#4 (204), beam#5 (205), and beam#6 (206). TRP#1 210 is associated with gNB 1 170-1, and TRP#2 220 is associated with gNB 2 170-2. In other examples, TRP #1 210 and TRP #2 220 may be associated with gNB 1 170-1 (similar to TRP 51 and TRP 52 being associated with RAN node 170), and in other examples, TRP #1 210 and TRP #2 220 may be associated with gNB 2 170-2 1 (similar to TRP 51 and TRP 52 being associated with RAN node 170).

Time window (from UE 110 to gNB 170). UE reports a time window: The UE can predict the measurement during this time duration without performing actual measurement behavior. Thus, the UE does not need to receive reference signals to perform measurement. The gNB does not transmit the reference signals (such as CSI-RS resource #1 ~ #6) during this time. Information transmitted (from gNB to UE) includes Model #ID, and the gNB provides to the UE threshold values appropriate for the specific model.

The UE can use a specific AI/ML model for beam failure prediction. The UE reports its model to the gNB. Examples of the inputs may be 1) RSRP/RSSI/etc. measurements for one or more CSI-RSs and/or SS/PBCH blocks transmitted from TRP#1, 2) RSRP measurement of CSI-RS#1 (beam#1) for a certain time duration, 3) RSRP measurement for CSI-RS#1 depending on its mobility, and/or 4) a probability value of beam failure for CSI-RS#1 (beam#1). The output includes, as examples (1-2): 1. A hard value (0/1, binary classification) about the predicted beam failure event. If the prediction result is that BFD will happen with more than the (input) probability, the output value would be 1, or 2. a soft value.

### UE behavior: (standard perspective)

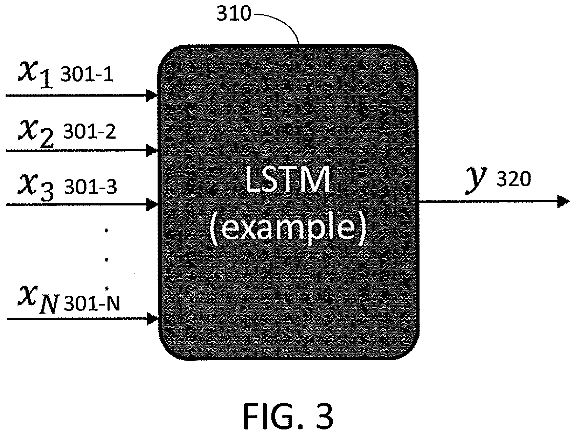

Referring to FIG. 3, if output 320 is a soft value, if the UE is configured to use a specific AI/ML model for the BFD prediction and if the output value 320 of the model is greater than the value (e.g., y ≥ λ), the UE 110 is allowed to skip the BFD event report and is also allowed to select another beam for communications. However, the UE should report the selected another beam (CSI-RS resource ID), where the selected RSRP of the beam is greater than RSRP requirement. Reasoning/Justification: 1) the network has to know what the serving beam UE is using, 2) the UE does not need to report BFD event for re-establishment of beams. λ: a threshold value for the given BFD event probability X % (given in A), y: output of AI/ML model described in FIG. 3.

Accordingly, FIG. 3 shows an illustrative example of input and output of a AI/MI, model 310. The inputs of the AI/MI, model 310 (such as a LSTM) include x1 (301-1), x2 (301-2), x3 (301-3), and xN (301-N). The output of the AI/ML model 310 is y 320.

In case the output value 320 of the model 310 is less than the value (e.g., y ≤ λ), the UE should use the current gNB beam. Even if the UE selects a different beam by its implementation, the network is not able to transmit PDCCH through the selected beam.

If output 320 is a binary value, if the UE 110 is configured to use a specific AI/ML model 310 for the BFD prediction and if the output value 320 of the model 310 is 1, the UE 110 is allowed to skip the BFD event report but the UE 110 should report another beam (CSI-RS resource ID) selected by the UE 110, where the selected RSRP of the beam is greater than RSRP requirement.

Additional Embodiment: the UE is indicated to report information on predicted BFD for a specific beam (for example, in response to the output of the beam failure detection model being greater than or equal to a beam failure detection (BFD) threshold, or in response to the output of the beam failure detection model being equal to one).

### Network behavior for the proposed UE behavior

The network (e.g. gNB 170) selects a BFD AI/ML model and configures the UE 110 to the selected AI/ML model for BFD prediction. The network indicates the above UE behavior (the network behavior is based on the UE behavior).

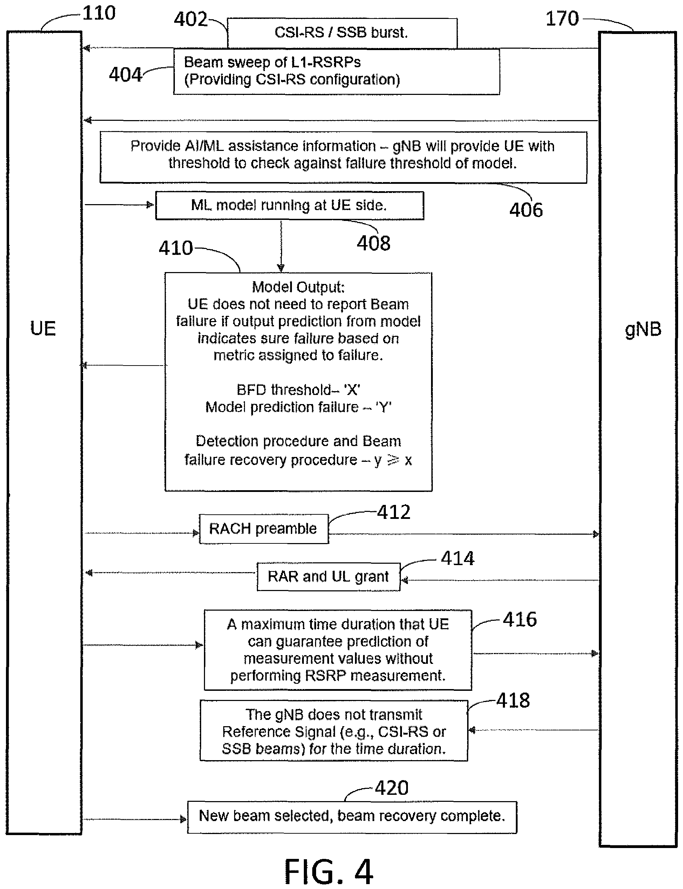

FIG. 4 is a signaling diagram based on the examples described herein. At 402, the gNB 170 performs CSI-RS and/or SSB burst. At 404, the gNB 170 performs a beam sweep of L1-RSRPs, and the gNB 170 provides a CSI-RS configuration to the UE 110. At 406, the gNB 170 provides to the UE 110 AI/ML assistance information. In particular, at 406, the gNB provides to the UE 110 a threshold to check against a failure threshold of a model (e.g. an AI model or ML model). At 408, the UE 110 executes the ML model.

At 410, the UE 110 determines an output of the ML model. The UE does not need to report beam failure if output prediction from the model indicates a sure failure based on a metric assigned to failure. The BFD threshold is 'X', the model prediction failure is based on model output 'Y'. During the detection procedure and beam failure recovery procedure, the UE 110 determines whether model output 'Y' is greater than or equal to 'X', where 'X' is the metric assigned to failure.

At 412, UE 110 transmits to the gNB 170 a RACH preamble. At 414, the gNB 170 transmits to the UE a RAR and UL grant. At 416, the UE 110 transmits to the gNB 170 a maximum time duration that the UE 110 can guarantee prediction of measurement values without performing RSRP measurement. At 418, the gNB 170 does not transmit a reference signal (e.g., CSI-RS or SSB beams) for the time duration. At 420, the UE 110 selects a new beam, and the beam recovery process is complete.

During a CSI-RS or SSB slot, narrow or wide beams are transmitted, where a beam sweep occurs using L1-RSRP values. The gNB attaches a weighted threshold value to each beam allowing for successful beam detection during RRC connected mode. A model is functioning on the UE side to regularly capture previously conducted beam sweeps and trains itself to detect beam failure using the weighted threshold attached to the captured beams. If Beam Failure Detection threshold is determined as 'X', and the model prediction failure is determined as `Y', then: Beam failure = X > Y.

Once the model has determined beam failure, new RSRP measurements are not carried, and instead the model moves forward to using remaining beams based on beam sweep or the model assigns new RSRP measurement to the CSI-RS resource set going from #1, #2, #3....#N beams.

The predictions occur in an assigned time frame determined by the UE 110, where no reference signal is transmitted from gNB to UE. During this window, the UE using the model determines the best beam to deploy based on its training of a previously completed beam sweep. The UE determines the best model to use based on criteria transmitted by the gNB 170 prior to inference mode.

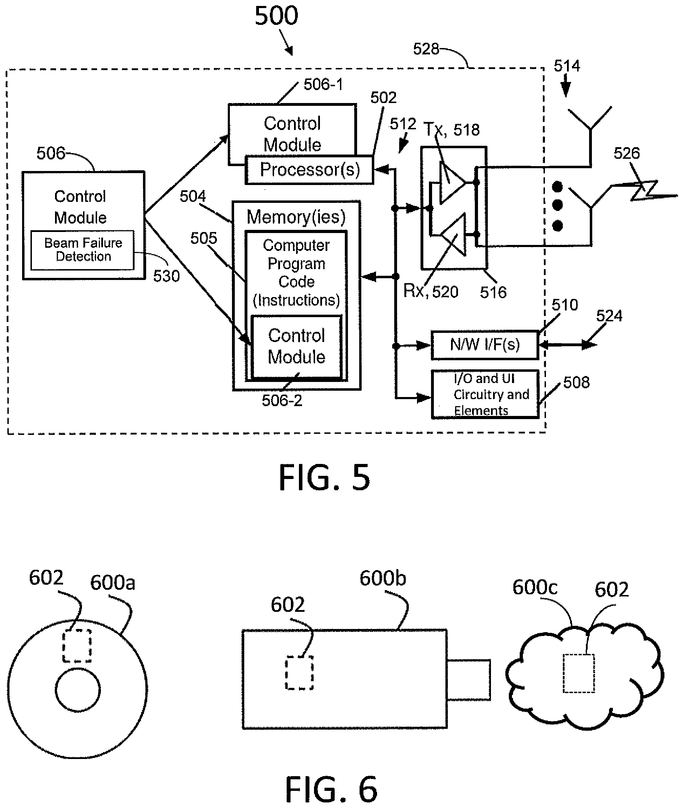

FIG. 5 is an example apparatus 500, which may be implemented in hardware, configured to implement the examples described herein. The apparatus 500 comprises at least one processor 502 (e.g. an FPGA and/or CPU), one or more memories 504 including computer program code 505, the computer program code 505 having instructions to carry out the methods described herein, wherein the at least one memory 504 and the computer program code 505 are configured to, with the at least one processor 502, cause the apparatus 500 to implement circuitry, a process, component, module, or function (implemented with control module 506) to implement the examples described herein. The memory 504 may be a non-transitory memory, a transitory memory, a volatile memory (e.g. RAM), or a non-volatile memory (e.g. ROM).

Beam failure detection 530 may implement the examples described herein directed to beam failure detection.

The apparatus 500 includes a display and/or I/O interface 508, which includes user interface (UI) circuitry and elements, that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 500 includes one or more communication e.g. network (N/W) interfaces (I/F(s)) 510. The communication I/F(s) 510 may be wired and/or wireless and communicate over the Internet/other network(s) via any communication technique including via one or more links 524. The link(s) 524 may be the link(s) 131 and/or 176 from FIG. 1. The link(s) 131 and/or 176 from FIG. 1 may also be implemented using transceiver(s) 516 and corresponding wireless link(s) 526. The communication I/F(s) 510 may comprise one or more transmitters or one or more receivers.

The transceiver 516 comprises one or more transmitters 518 and one or more receivers 520. The transceiver 516 and/or communication I/F(s) 510 may comprise standard well-known components such as an amplifier, filter, frequency-converter, (de)modulator, and encoder/decoder circuitries and one or more antennas, such as antennas 514 used for communication over wireless link 526.

The control module 506 of the apparatus 500 comprises one of or both parts 506-1 and/or 506-2, which may be implemented in a number of ways. The control module 506 may be implemented in hardware as control module 506-1, such as being implemented as part of the one or more processors 502. The control module 506-1 may be implemented also as an integrated circuit or through other hardware such as a programmable gate array. In another example, the control module 506 may be implemented as control module 506-2, which is implemented as computer program code (having corresponding instructions) 505 and is executed by the one or more processors 502. For instance, the one or more memories 504 store instructions that, when executed by the one or more processors 502, cause the apparatus 500 to perform one or more of the operations as described herein. Furthermore, the one or more processors 502, the one or more memories 504, and example algorithms (e.g., as flowcharts and/or signaling diagrams), encoded as instructions, programs, or code, are means for causing performance of the operations described herein.

The apparatus 500 to implement the functionality of control 506 may be UE 110, RAN node 170 (e.g. gNB), or network element(s) 190 (e.g. LMF 190). Thus, processor 502 may correspond to processor(s) 120, processor(s) 152 and/or processor(s) 175, memory 504 may correspond to one or more memories 125, one or more memories 155 and/or one or more memories 171, computer program code 505 may correspond to computer program code 123, computer program code 153, and/or computer program code 173, control module 506 may correspond to module 140-1, module 140-2, module 150-1, and/or module 150-2, and communication I/F(s) 510 and/or transceiver 516 may correspond to transceiver 130, antenna(s) 128, transceiver 160, antenna(s) 158, N/W I/F(s) 161, and/or N/W I/F(s) 180. Alternatively, apparatus 500 and its elements may not correspond to either of UE 110, RAN node 170, or network element(s) 190 and their respective elements, as apparatus 500 may be part of a self-organizing/optimizing network (SON) node or other node, such as a node in a cloud.

Apparatus 500 may also correspond to gNB 170-1, gNB 170-2, TRP#1 210, or TRP#2 220. The apparatus 500 may also be distributed throughout the network (e.g. 100) including within and between apparatus 500 and any network element (such as a network control element (NCE) 190 and/or the RAN node 170 and/or UE 110).

Interface 512 enables data communication and signaling between the various items of apparatus 500, as shown in FIG. 5. For example, the interface 512 may be one or more buses such as address, data, or control buses, and may include any interconnection mechanism, such as a series of lines on a motherboard or integrated circuit, fiber optics or other optical communication equipment, and the like. Computer program code (e.g. instructions) 505, including control 506 may comprise object-oriented software configured to pass data or messages between objects within computer program code 505, or computer program code (e.g. instructions) 505, including control 506 may include functional, scripting, or procedural code. The apparatus 500 need not comprise each of the features mentioned, or may comprise other features as well. The various components of apparatus 500 may at least partially reside in a common housing 528, or a subset of the various components of apparatus 500 may at least partially be located in different housings, which different housings may include housing 528.

FIG. 6 shows a schematic representation of non-volatile memory media 600a (e.g. computer/compact disc (CD) or digital versatile disc (DVD)) and 600b (e.g. universal serial bus (USB) memory stick) and 600c (e.g. cloud storage for downloading instructions and/or parameters 602 or receiving emailed instructions and/or parameters 602) storing instructions and/or parameters 602 which when executed by a processor allows the processor to perform one or more of the steps of the methods described herein. Instructions and/or parameters 602 may represent a non-transitory computer readable medium.

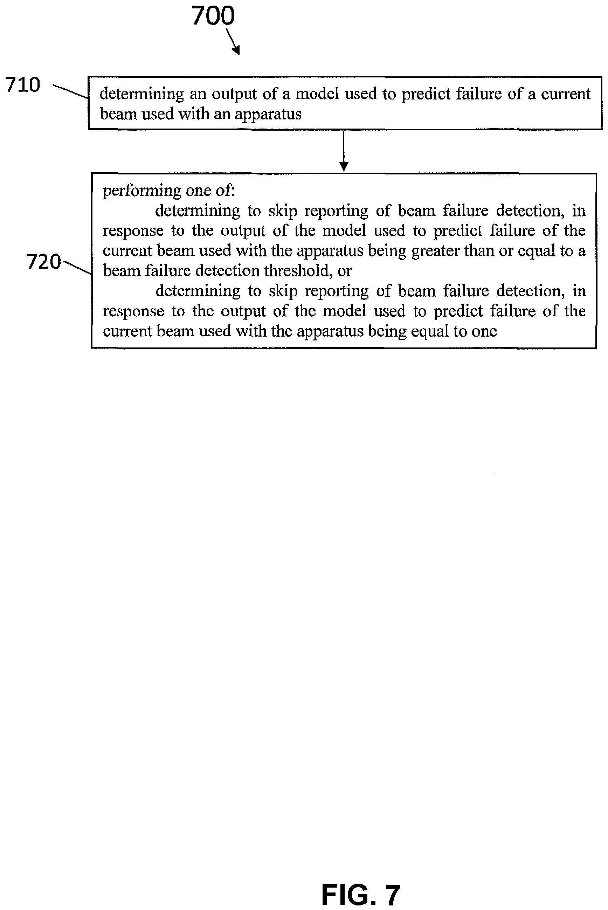

FIG. 7 is an example method 700, based on the example embodiments described herein. At 710, the method includes determining an output of a model used to predict failure of a current beam used with the apparatus. At 720, the method includes performing one of: determining to skip reporting of beam failure detection, in response to the output of the model used to predict failure of the current beam used with the apparatus being greater than or equal to a beam failure detection threshold, or determining to skip reporting of beam failure detection, in response to the output of the model used to predict failure of the current beam used with the apparatus being equal to one. Method 700 may be performed with UE 110 or apparatus 500.

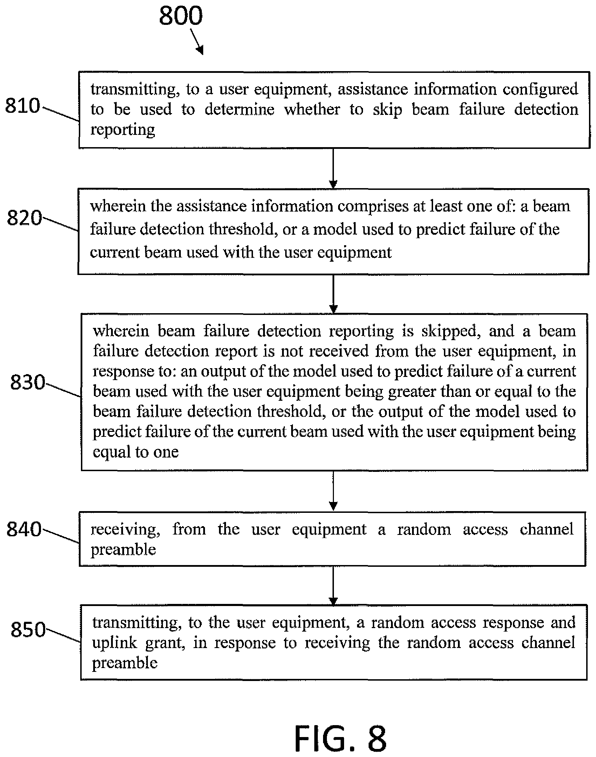

FIG. 8 is an example method 800, based on the example embodiments described herein. At 810, the method includes transmitting, to a user equipment, assistance information configured to be used to determine whether to skip beam failure detection reporting. At 820, the method includes wherein the assistance information comprises at least one of: a beam failure detection threshold, or a model used to predict failure of the current beam used with the user equipment. At 830, the method includes wherein beam failure detection reporting is skipped, and a beam failure detection report is not received from the user equipment, in response to: an output of the model used to predict failure of a current beam used with the user equipment being greater than or equal to the beam failure detection threshold, or the output of the model used to predict failure of the current beam used with the user equipment being equal to one. At 840, the method includes receiving, from the user equipment, a random access channel preamble. At 850, the method includes transmitting, to the user equipment, a random access response and uplink grant, in response to receiving the random access channel preamble. Method 800 may be performed with radio access network node 170 (e.g. gNB 170), gNB 170-1, gNB 170-2, TRP#1 210, TRP#2 220, or apparatus 500.

The following examples are provided and described herein.

Example 1. An apparatus including: at least one processor; and at least one memory storing instructions that, when executed by the at least one processor, cause the apparatus at least to: determine an output of a model used to predict failure of a current beam used with the apparatus; and perform one of: determine to skip reporting of beam failure detection, in response to the output of the model used to predict failure of the current beam used with the apparatus being greater than or equal to a beam failure detection threshold, or determine to skip reporting of beam failure detection, in response to the output of the model used to predict failure of the current beam used with the apparatus being equal to one.

2. The apparatus of example 1, wherein the instructions, when executed by the at least one processor, cause the apparatus at least to: receive, from a radio access network node, assistance information comprising at least one of: the beam failure detection threshold, or the model used to predict failure of the current beam used with the apparatus.

Example 3. The apparatus of any of examples 1 to 2, wherein the instructions, when executed by the at least one processor, cause the apparatus at least to: transmit, to a radio access network node, a duration during which the apparatus predicts at least one measurement of a radio channel or a radio channel of a beam.

Example 4. The apparatus of example 3, wherein a reference signal used for performing the at least one measurement of the radio channel is not received from the radio access network node during the duration transmitted to the radio access network node.

Example 5. The apparatus of any of examples 3 to 4, wherein the instructions, when executed by the at least one processor, cause the apparatus at least to: predict the at least one measurement of the radio channel during the duration.

Example 6. The apparatus of example 5, wherein the instructions, when executed by the at least one processor, cause the apparatus at least to: select a new beam used with the apparatus that differs from the current beam used with the apparatus, based on the predicted at least one measurement of the radio channel, in response to: the output of the model used to predict failure of the current beam used with the apparatus being greater than or equal to the beam failure detection threshold, or the output of the model used to predict failure of the current beam used with the apparatus being equal to one; wherein a reference signal receive power of the selected new beam is greater than a reference signal received power requirement.

Example 7. The apparatus of any of examples 1 to 6, wherein the instructions, when executed by the at least one processor, cause the apparatus at least to: select a new beam used with the apparatus that differs from the current beam used with the apparatus, in response to: the output of the model used to predict failure of the current beam used with the apparatus being greater than or equal to the beam failure detection threshold, or the output of the model used to predict failure of the current beam used with the apparatus being equal to one; wherein a reference signal receive power of the selected new beam is greater than a reference signal received power requirement.

Example 8. The apparatus of example 6 or 7, wherein the instructions, when executed by the at least one processor, cause the apparatus at least to: report the selected new beam to a radio access network node.

Example 9. The apparatus of any of examples 1 to 8, wherein the instructions, when executed by the at least one processor, cause the apparatus at least to: use the current beam, in response to: the output of the model used to predict failure of the current beam being less than the beam failure detection threshold, or the output of the model used to predict failure of the current beam being equal to zero.

Example 10. The apparatus of any of examples 1 to 9, wherein an input to the model used to predict failure of the current beam used with the apparatus comprises at least one measurement of a radio channel.

Example 11. The apparatus of example 10, wherein the at least one measurement of the radio channel comprises one or more of: a reference signal received power for one or more channel state information reference signals, or a reference signal received power for one or more synchronization signal and physical broadcast channel blocks, or a reference signal received power for a channel state information reference signal for a time duration, or a reference signal received power for a channel state information reference signal depending on a mobility of the apparatus, or a channel state information from a specific reference signals (e.g. one or more channel state information reference signals) for channel estimation where the channel state information includes channel coefficients, eigen vectors of the channels, and channel direction information.

Example 12. The apparatus of any of examples 1 to 11, wherein an input to the model used to predict failure of the current beam used with the apparatus comprises a probability of failure of the current beam used with the apparatus.

Example 13. The apparatus of any of examples 1 to 12, wherein the instructions, when executed by the at least one processor, cause the apparatus at least to: determine the model using at least one beam sweep or a measurement of a radio channel.

Example 14. The apparatus of any of examples 1 to 13, wherein the model comprises a machine learning model.

Example 15. The apparatus of any of examples 1 to 14, wherein the instructions, when executed by the at least one processor, cause the apparatus at least to: determine to report beam failure detection, in response to: the output of the model used to predict failure of the current beam being less than the beam failure detection threshold, or the output of the model used to predict failure of the current beam being equal to zero.

Example 16. An apparatus including: at least one processor; and at least one memory storing instructions that, when executed by the at least one processor, cause the apparatus at least to: transmit, to a user equipment, assistance information configured to be used to determine whether to skip beam failure detection reporting; wherein the assistance information comprises at least one of: a beam failure detection threshold, or a model used to predict failure of the current beam used with the user equipment; wherein beam failure detection reporting is skipped, and a beam failure detection report is not received from the user equipment, in response to: an output of the model used to predict failure of a current beam used with the user equipment being greater than or equal to the beam failure detection threshold, or the output of the model used to predict failure of the current beam used with the user equipment being equal to one; receive, from the user equipment, a random access channel preamble; and transmit, to the user equipment, a random access response and uplink grant, in response to receiving the random access channel preamble.

Example 17. The apparatus of example 16, wherein reporting of beam failure detection is skipped and not received from the user equipment, in response to the output of the model used to predict failure of the current beam used with the apparatus being equal to one.

Example 18. The apparatus of any of examples 16 to 17, wherein the instructions, when executed by the at least one processor, cause the apparatus at least to: receive, from the user equipment, a duration during which the user equipment predicts at least one measurement of a radio channel or a radio channel of a beam.

Example 19. The apparatus of example 18, wherein the instructions, when executed by the at least one processor, cause the apparatus at least to: determine to not transmit, to the user equipment, a reference signal used for performing the at least one measurement of the radio channel, during the duration received from the user equipment.

Example 20. The apparatus of any of example 18 to 19, wherein the at least one measurement of the radio channel is predicted with the user equipment during the duration.

Example 21. The apparatus of example 20, wherein the instructions, when executed by the at least one processor, cause the apparatus at least to: receive, from the user equipment, a report comprising a new beam selected with the user equipment for performing communication that differs from the current beam used with the user equipment, based on the predicted at least one measurement of the radio channel, in response to: the output of the model used to predict failure of the current beam used with the user equipment being greater than or equal to the beam failure detection threshold, or the output of the model used to predict failure of the current beam used with the user equipment being equal to one; wherein a reference signal receive power of the selected new beam is greater than a reference signal received power requirement.

Example 22. The apparatus of any of examples 16 to 21, wherein the instructions, when executed by the at least one processor, cause the apparatus at least to: receive, from the user equipment, a report comprising a new beam selected with the user equipment for performing communication that differs from the current beam used with the user equipment, in response to: the output of the model used to predict failure of the current beam used with the user equipment being greater than or equal to the beam failure detection threshold, or the output of the model used to predict failure of the current beam used with the user equipment being equal to one; wherein a reference signal receive power of the selected new beam is greater than a reference signal received power requirement.

Example 23. The apparatus of any of examples 16 to 22, wherein the current beam is used with the user equipment, in response to: the output of the model used to predict failure of the current beam being less than the beam failure detection threshold, or the output of the model used to predict failure of the current beam being equal to zero.

Example 24. The apparatus of any of examples 16 to 23, wherein an input to the model used to predict failure of the current beam used with the apparatus comprises at least one measurement of a radio channel.

Example 25. The apparatus of example 24, wherein the at least one measurement of the radio channel comprises one or more of: a reference signal received power for one or more channel state information reference signals, or a reference signal received power for one or more synchronization signal and physical broadcast channel blocks, or a reference signal received power for a channel state information reference signal for a time duration, or a reference signal received power for a channel state information reference signal depending on a mobility of the apparatus, or a channel state information from a specific reference signal (e.g. one or more channel state information reference signals) for channel estimation where the channel state information includes channel coefficients, eigen vectors of the channels, and channel direction information.

Example 26. The apparatus of any of examples 16 to 25, wherein an input to the model used to predict failure of the current beam used with the apparatus comprises a probability of failure of the current beam used with the apparatus.

Example 27. The apparatus of any of examples 16 to 26, wherein the model is determined using at least one beam sweep or a measurement of a radio channel.

Example 28. The apparatus of any of examples 16 to 27, wherein the model comprises a machine learning model.

Example 29. The apparatus of any of examples 16 to 28, wherein a beam failure detection report is not received from the user equipment, in response to: the output of the model used to predict failure of the current beam being less than the beam failure detection threshold.

Example 30. The apparatus of any of examples 16 to 29, wherein a beam failure detection report is not received from the user equipment, in response to: the output of the model used to predict failure of the current beam being equal to zero.

Example 31. A method including: determining an output of a model used to predict failure of a current beam used with an apparatus; and performing one of: determining to skip reporting of beam failure detection, in response to the output of the model used to predict failure of the current beam used with the apparatus being greater than or equal to a beam failure detection threshold, or determining to skip reporting of beam failure detection, in response to the output of the model used to predict failure of the current beam used with the apparatus being equal to one.

Example 32. A method including: transmitting, to a user equipment, assistance information configured to be used to determine whether to skip beam failure detection reporting; wherein the assistance information comprises at least one of: a beam failure detection threshold, or a model used to predict failure of the current beam used with the user equipment; wherein beam failure detection reporting is skipped, and a beam failure detection report is not received from the user equipment, in response to: an output of the model used to predict failure of a current beam used with the user equipment being greater than or equal to the beam failure detection threshold, or the output of the model used to predict failure of the current beam used with the user equipment being equal to one; receiving, from the user equipment, a random access channel preamble; and transmitting, to the user equipment, a random access response and uplink grant, in response to receiving the random access channel preamble.

Example 33. An apparatus including: means for determining an output of a model used to predict failure of a current beam used with the apparatus; and means for performing one of: determining to skip reporting of beam failure detection, in response to the output of the model used to predict failure of the current beam used with the apparatus being greater than or equal to a beam failure detection threshold, or determining to skip reporting of beam failure detection, in response to the output of the model used to predict failure of the current beam used with the apparatus being equal to one.

Example 34. An apparatus including: means for transmitting, to a user equipment, assistance information configured to be used to determine whether to skip beam failure detection reporting; wherein the assistance information comprises at least one of: a beam failure detection threshold, or a model used to predict failure of the current beam used with the user equipment; wherein beam failure detection reporting is skipped, and a beam failure detection report is not received from the user equipment, in response to: an output of the model used to predict failure of a current beam used with the user equipment being greater than or equal to the beam failure detection threshold, or the output of the model used to predict failure of the current beam used with the user equipment being equal to one; means for receiving, from the user equipment a random access channel preamble; and means for transmitting, to the user equipment, a random access response and uplink grant, in response to receiving the random access channel preamble.

Example 35. A computer readable medium including instructions stored thereon for performing at least the following: determining an output of a model used to predict failure of a current beam used with an apparatus; and performing one of: determining to skip reporting of beam failure detection, in response to the output of the model used to predict failure of the current beam used with the apparatus being greater than or equal to a beam failure detection threshold, or determining to skip reporting of beam failure detection, in response to the output of the model used to predict failure of the current beam used with the apparatus being equal to one.

Example 36. A computer readable medium including instructions stored thereon for performing at least the following: transmitting, to a user equipment, model assistance information configured to be used to determine whether to skip beam failure detection reporting; wherein the assistance information comprises at least one of: a beam failure detection threshold, or a model used to predict failure of the current beam used with the user equipment; wherein beam failure detection reporting is skipped, and a beam failure detection report is not received from the user equipment, in response to: an output of the model used to predict failure of a current beam used with the user equipment being greater than or equal to the beam failure detection threshold, or the output of the model used to predict failure of the current beam used with the user equipment being equal to one; receiving, from the user equipment a random access channel preamble; and transmitting, to the user equipment, a random access response and uplink grant, in response to receiving the random access channel preamble.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memories as described herein may be implemented using any suitable data storage technology, such as semiconductor based memory devices, flash memory, magnetic memory devices and systems, optical memory devices and systems, non-transitory memory, transitory memory, fixed memory and removable memory. The memories may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memories that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The following acronyms and abbreviations that may be found in the specification and/or the drawing figures are given as follows (the abbreviations and acronyms may be appended/combined with each other or with other characters using e.g. a dash, hyphen, slash, letter, or number, and may be case insensitive):
- 3GPP: third generation partnership project
- 4G: fourth generation
- 5G: fifth generation
- 5GC: 5G core network
- AI: artificial intelligence
- AMF: access and mobility management function
- ASIC: application-specific integrated circuit
- BFD: beam failure detection
- BFR: beam failure recovery
- CD: compact/computer disc
- CSI-RS: channel state information reference signal
- CPU: central processing unit
- CU: central unit or centralized unit
- DSP: digital signal processor
- DU: distributed unit
- DVD: digital versatile disc
- eNB: evolved Node B (e.g., an LTE base station)
- EN-DC: E-UTRAN new radio - dual connectivity
- en-gNB: node providing NR user plane and control plane protocol terminations towards the UE, and acting as a secondary node in EN-DC
- E-UTRA: evolved UMTS terrestrial radio access, i.e., the LTE radio access technology
- E-UTRAN: E-UTRA network
- F1: interface between the CU and the DU
- FPGA: field-programmable gate array
- gNB: base station for 5G/NR, i.e., a node providing NR user plane and control plane protocol terminations towards the UE, and connected via the NG interface to the 5GC
- IAB: integrated access and backhaul
- ID: identifier
- I/F: interface
- I/O: input/output
- L1: layer 1
- L1-RSRP: layer 1 reference signal received power
- LMF: location management function
- LSTM: long short-term memory
- LTE: long term evolution (4G)
- MAC: medium access control
- ML: machine learning
- MME: mobility management entity
- MRO: mobility robustness optimization
- NCE: network control element
- ng or NG: new generation
- ng-eNB: new generation eNB
- NG-RAN: new generation radio access network
- NR: new radio
- N/W: network
- OAM: operations, administration and maintenance
- PBCH: physical broadcast channel
- PDA: personal digital assistant
- PDCCH: physical downlink control channel
- PDCP: packet data convergence protocol
- PHY: physical layer
- PRACH: physical random access channel
- QCL: quasi co location
- ra: random access (e.g., in BFR-SSB-Resource.ra-PreambleIndex)
- RACH: random access channel
- RAM: random access memory
- RAN: radio access network
- RAR: random access response
- RFC: request for comments
- RLC: radio link control
- ROM: read-only memory
- RRC: radio resource control
- RSRP: reference signal received power
- RSSI: received signal strength indicator
- RU: radio unit
- Rx: receive, or receiver, or reception
- SDAP: service data adaptation protocol
- SGW: serving gateway
- SMF: session management function
- SON: self-organizing/optimizing network
- SS: synchronization signal
- SSB: synchronization signal block
- TCI: transmission configuration indicator
- TRP: transmission reception point
- Tx: transmit, or transmitter, or transmission
- UAV: unmanned aerial vehicle
- UE: user equipment (e.g., a wireless, typically mobile device)
- UI: user interface
- UL: uplink
- UMTS: Universal Mobile Telecommunications System
- UPF: user plane function
- USB: universal serial bus
- UTRAN: UMTS terrestrial radio access network
- X2: network interface between RAN nodes and between RAN and the core network
- Xn: network interface between NG-RAN nodes

## Claims

1. An apparatus (110, 500) comprising:
at least one processor (502); and
at least one memory (504) storing instructions (505) that, when executed by the at least one processor (502), cause the apparatus at least to:
determine an output of a model used to predict failure of a current beam used with the apparatus; and
perform one of:
determine to skip reporting of beam failure detection, in response to the output of the model used to predict failure of the current beam used with the apparatus being greater than or equal to a beam failure detection threshold, or
determine to skip reporting of beam failure detection, in response to the output of the model used to predict failure of the current beam used with the apparatus being equal to one.

2. The apparatus of claim 1, wherein the instructions, when executed by the at least one processor, cause the apparatus at least to:
receive, from a radio access network node (170), assistance information comprising at least one of: the beam failure detection threshold, or the model used to predict failure of the current beam used with the apparatus.

3. The apparatus of any of claims 1 to 2, wherein the instructions, when executed by the at least one processor, cause the apparatus at least to:
transmit, to a radio access network node, a duration during which the apparatus predicts at least one measurement of a radio channel or a radio channel of a beam.

4. The apparatus of claim 3, wherein a reference signal used for performing the at least one measurement of the radio channel is not received from the radio access network node during the duration transmitted to the radio access network node.

5. The apparatus of any of claims 3 to 4, wherein the instructions, when executed by the at least one processor, cause the apparatus at least to:
predict the at least one measurement of the radio channel during the duration.

6. The apparatus of claim 5, wherein the instructions, when executed by the at least one processor, cause the apparatus at least to:
select a new beam used with the apparatus that differs from the current beam used with the apparatus, based on the predicted at least one measurement of the radio channel, in response to: the output of the model used to predict failure of the current beam used with the apparatus being greater than or equal to the beam failure detection threshold, or the output of the model used to predict failure of the current beam used with the apparatus being equal to one;
wherein a reference signal receive power of the selected new beam is greater than a reference signal received power requirement.

7. The apparatus of any of claims 1 to 6, wherein the instructions, when executed by the at least one processor, cause the apparatus at least to:
select a new beam used with the apparatus that differs from the current beam used with the apparatus, in response to: the output of the model used to predict failure of the current beam used with the apparatus being greater than or equal to the beam failure detection threshold, or the output of the model used to predict failure of the current beam used with the apparatus being equal to one;
wherein a reference signal receive power of the selected new beam is greater than a reference signal received power requirement.

8. The apparatus of claim 6 or 7, wherein the instructions, when executed by the at least one processor, cause the apparatus at least to:
report the selected new beam to a radio access network node.

9. The apparatus of any of claims 1 to 8, wherein the instructions, when executed by the at least one processor, cause the apparatus at least to:
use the current beam, in response to: the output of the model used to predict failure of the current beam being less than the beam failure detection threshold, or the output of the model used to predict failure of the current beam being equal to zero.

10. The apparatus of any of claims 1 to 9, wherein an input to the model used to predict failure of the current beam used with the apparatus comprises at least one measurement of a radio channel.

11. The apparatus of any of claims 1 to 10, wherein an input to the model used to predict failure of the current beam used with the apparatus comprises a probability of failure of the current beam used with the apparatus.

12. The apparatus of any of claims 1 to 11, wherein the instructions, when executed by the at least one processor, cause the apparatus at least to:
determine the model using at least one beam sweep or a measurement of a radio channel.

13. The apparatus of any of claims 1 to 12, wherein the model comprises a machine learning model.

14. The apparatus of any of claims 1 to 13, wherein the instructions, when executed by the at least one processor, cause the apparatus at least to:
determine to report beam failure detection, in response to: the output of the model used to predict failure of the current beam being less than the beam failure detection threshold, or the output of the model used to predict failure of the current beam being equal to zero.

15. A method comprising:
determining an output of a model used to predict failure of a current beam used with an apparatus; and
performing one of:
determining to skip reporting of beam failure detection, in response to the output of the model used to predict failure of the current beam used with the apparatus being greater than or equal to a beam failure detection threshold, or
determining to skip reporting of beam failure detection, in response to the output of the model used to predict failure of the current beam used with the apparatus being equal to one.
